# EUROPEAN PATENT SPECIFICATION

(11) **EP 4 299 932 B1**
(45) Date of publication and mention of the grant of the patent: **09.12.2026**
(21) Application number: 23177908.3
(22) Date of filing: 07.06.2023
(51) Int. Cl.: F16J 15/16, F16J 15/3204, F16J 15/34, F16J 15/447, F16C 33/78, F16C 23/08

(54) **SUPPORT ASSEMBLY FOR FOOD APPLICATIONS**
STÜTZANORDNUNG FÜR LEBENSMITTELANWENDUNGEN
ENSEMBLE SUPPORT POUR APPLICATIONS ALIMENTAIRES

(30) Priority: 30.06.2022 IT 202200013810
(43) Date of publication of application: 03.01.2024
(73) Proprietor: Aktiebolaget SKF, 415 50 Göteborg (SE)
(72) Inventor: Frezza, Pasquale, 81031 Aversa (CE) (IT); Bertolini, Andrea A, 54033 Carrara (IT); Berti, Renato, 54100 Massa (MS) (IT)
(74) Representative: Kohl, Thomas

(56) References cited:
- DE-A1- 3 806 928
- GB-A- 2 058 957
- JP-A- H08 226 447
- US-A1- 2015 167 743
- US-A1- 2015 176 651
- US-A1- 2017 219 012
- US-A1- 2021 009 318
- US-B1- 6 334 713
- US-B2- 9 506 554

## Description

### Technical field

The present invention relates to a support assembly for food applications. In particular, the present invention relates to a support assembly for food applications in which the support assembly is secured to a machine frame and intended to support movable, for example rotating, shafts by means of a suitable bearing.

### Prior art

As is known, in the food and beverage (F&B) industry there is increasing focus on the development of new machines and machine designs aimed at improving the safety and quality of food.

As is also known, the machines used in the food and beverage industry have many moving parts supported by rotating or sliding shafts, for example, conveyor belts, pasta makers, or machines for washing fresh produce. Such a support assembly is described e.g. in document GB2058957A.

All these machines must be frequently cleaned, often with water to which detergents and/or disinfectants are added, in order to control the growth of any bacteria that could contaminate the food. In particular, it is important that these machines not have crevices or other areas where dirt, or even just washing water, can get in and stagnate. This is because the stagnation of liquids or moisture promotes the proliferation of bacteria.

This is particularly a problem in the case of support assemblies for movable shafts, which may be end supports, receiving an end of the shaft, or through supports. Such support assemblies are made up of a casing, generally annular, having a base or flange for attachment to the machine, a bearing unit, located inside the casing and coupled to the movable shaft, and a cover, normally bowl-shaped, which is force-fitted on the casing.

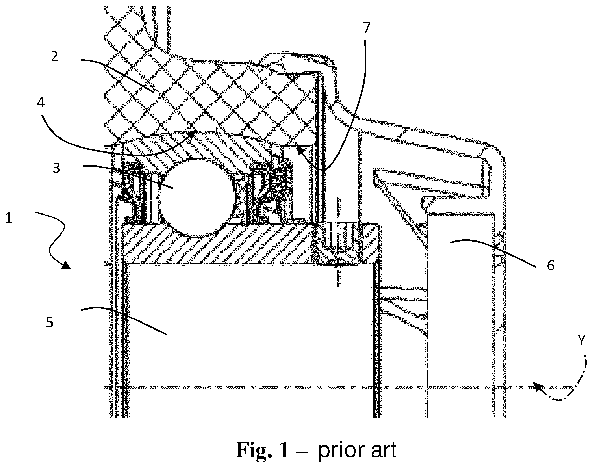

An embodiment of a support assembly according to the prior art is shown in Figure 1. The support assembly 1 comprises a bearing unit 3, for example a roller bearing of known type, adapted to receive in a known manner a movable, for example rotating, shaft 5 so as to support the latter, and a casing 2 having a through seat 4 in which the bearing unit 3 is received stably in a known manner.

The support assembly 1 is in particular intended to be mounted on machinery for the food and beverage industry. The casing 2 has a generally annular shape and is designed in such a way as to be adapted to receive the bearing unit 3 inside it, in particular in the through seat 4, in a known manner. The seat 4 generally has an axis of symmetry Y which is also the axis of symmetry of the casing 2. In any case, the support assembly 1 always also has a cover 6 for sealing an inlet 7 of the through seat 4 of the casing 2 in a fluid-tight manner.

Therefore, in F&B applications, the cover is mounted on the casing and this attachment creates a static seal. However this type of seal does not guarantee a compact solution and the possibility of ascertaining the progress of the work. Moreover, the cover is generally closed at the bottom and it is therefore not possible to pass the shaft through the cover itself. Lastly, a further disadvantage is the fact that, owing to misalignment, the shaft may touch the cover and damage it.

In short, there is currently no known solution that creates a seal that efficiently protects the bearing unit from water and external contaminants. There is also no known support assembly having an open cover which protects the bearing unit both from external contaminants and, in particular during the washing process, from water and detergents. Lastly, there is no known solution that is impervious to angular misalignments between the shaft and the bearing unit.

It is therefore necessary to define a support assembly offering a new design solution that can solve or at least mitigate the abovementioned drawbacks.

### Brief description of the invention

With a view to substantially solving the above technical problems, one aim of the present invention is to define a support assembly for food applications, in particular, a support assembly for a rotating shaft and associated bearing unit, secured to a machine frame, which provides a new anchoring for the cover and a different seal against contaminants and/or washing, the seal being applied directly to the bearing unit.

Specifically, the cover creates a dynamic seal directly on the bearing unit, protecting the latter from contaminants and from washing water. The seal is created by a coupling portion for coupling the cover to the radially outer ring of the bearing unit.

Moreover, the cover is firmly anchored to the radially inner ring of the bearing unit. This anchoring is achieved by means of a plurality of teeth on the cover which are adapted to engage with a corresponding plurality of annular seats on the radially inner ring.

Therefore, the present invention provides a support assembly for food applications having the features set out in the independent claim attached to the present description.

Further embodiments of the invention, which are preferred and/or particularly advantageous, are described according to the features set out in the attached dependent claims.

### Brief description of the drawings

The invention will now be described with reference to the attached drawing, which shows a non-limiting example of an embodiment of the invention, in which:
- Figure 1 shows, in cross section, a support assembly produced according to the prior art,

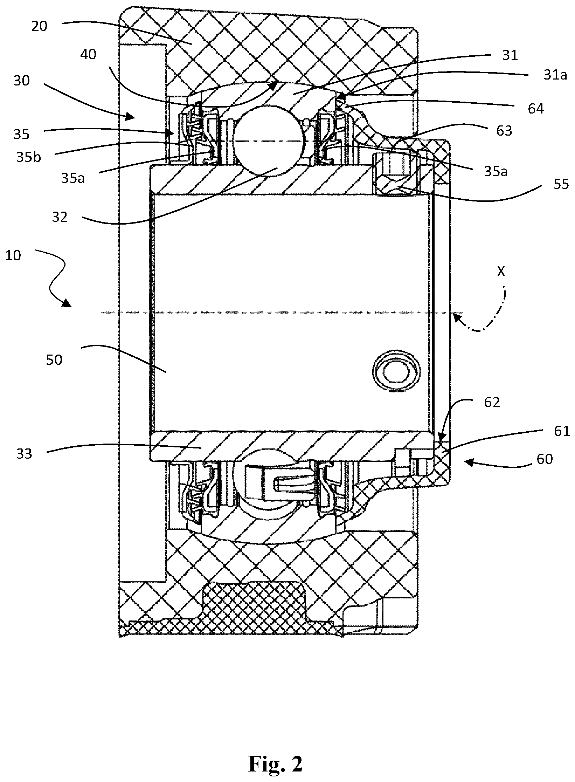

- Figure 2 shows, in cross section, a support assembly according to an embodiment of the present invention,
- Figure 3 shows, on an enlarged scale, a detail of Figure 2,
- Figure 4 shows, on an enlarged scale, a detail of a cover of the support assembly of Figure 2, and
- Figure 5 shows a radially inner ring of the support assembly of Figure 2.

### Detailed description

Purely by way of non-limiting example and with reference to the above figures, 10 designates, as a whole, a support assembly for movable, rotating or sliding shafts, which are not shown for the sake of simplicity.

The support assembly 10 comprises a bearing unit 30, for example a roller bearing of known type, adapted to receive in a known manner a movable, for example rotating, shaft 50 so as to support the latter, and a casing 20 having a through seat 40 in which the bearing unit 30 is received stably in a known manner.

The support assembly 10 is in particular intended to be mounted on machinery for the food and beverage industry. The casing 20 has a generally annular shape and is designed in such a way as to be adapted to receive the bearing unit 30 inside it, in particular in the through seat 40, in a known manner. The seat 40 generally has an axis of symmetry X which is also the axis of symmetry of the casing 30.

Throughout the present description and in the claims, terms and expressions indicating positions and directions such as "radial", "axial" or "transverse", are to be understood with reference to the axis of symmetry X.

The bearing unit 30 is provided with:
- a radially outer ring 31 , stationary,
- a radially inner ring 33, rotating about a central axis of rotation X of the bearing unit 30, and stably connected to the shaft 50 by securing means 55 of known type,
- a row of rolling elements 32, in this case balls, interposed between the radially outer ring 31 and the radially inner ring 33,
- sealing devices 35 for protecting rolling bodies and associated raceways of the rings of the bearing unit 30 against external contaminants and washing water.

Specifically, on the opposite side to the securing means 55, the sealing device comprises a first shield with an elastomeric coating 35a and a second shield with an elastomeric coating 35b, both having a plurality of pairs of annular sealing lips, each lip of each pair of annular sealing lips being radially and axially overlapping, but also radially and axially separate, in other words free of one another without any point of contact. Conversely, on the same side as the securing means 55, the sealing device has only the first shield with an elastomeric coating 35a. This is because, according to the invention, sealing against external contaminants and washing water is guaranteed by the fact that the support assembly 10 comprises a cover 60 adapted to seal the bearing unit 30 in a fluid-tight manner.

The cover 60 is generally bowl-shaped, with a bottom wall 61 which, in the example in the figures, may have a circular opening 62 for the passage of the shaft 50, and may thus be of "open" type. The cover 60 further comprises a side wall 63 shaped but substantially cylindrical and integrally connected to the bottom wall 61. The distal end of the side wall 63 is a coupling portion 64 for coupling to the radially outer ring 31 of the bearing unit 30.

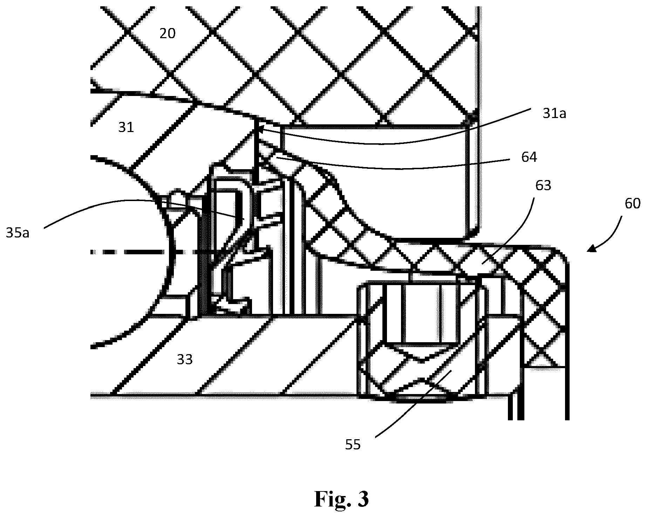

With reference also to Figure 3, the coupling portion 64 is designed to be coupled in use to the radially outer ring 31 axially on the outside of said ring. In particular, the coupling portion 64 engages, axially on the outside, with an annular surface 31a, axially external, of the radially outer ring 31, providing a dynamic seal of "sliding contact" type or alternatively of "labyrinth", in other words non-contacting, type. As mentioned, the cover creates a dynamic seal in that, while the radially outer ring 31 is stationary, the cover, as will be explained below, is anchored to the rotating radially inner ring 33.

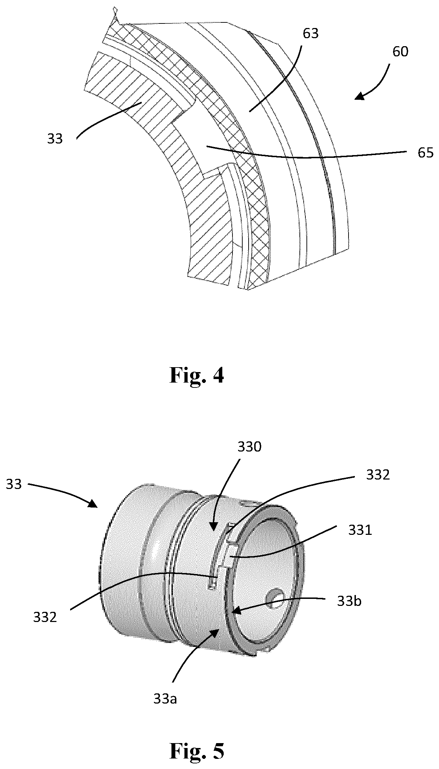

With reference to Figures 4 and 5, the side wall 63 of the cover 60 has, radially on the inside, a plurality of teeth 65 projecting radially inwards from the cover 60 and spaced apart circumferentially, each extending over a limited circumferential segment of the side wall.

In combination with the teeth 65 on the cover 60, the radially outer lateral surface 33a of the radially inner ring 33 has a corresponding plurality of annular seats 330 for receiving the teeth 65 on the cover 60. Each annular seat 330 consists of an inlet groove 331 spaced axially with respect to a front edge 33b of the radially inner ring 33 and interrupting radially at least part of the front edge 33b of the radially inner ring 33; each annular seat 330 further comprises a pair of anchoring grooves 332 arranged on the opposite side to the inlet groove 331, which engage in use with the teeth 65 on the cover 60, anchoring the latter to the bearing unit 30.

Preferably, the plurality of teeth 65 and the corresponding plurality of annular seats 330 are three in number and the teeth 65 and the annular seats 330 are spaced apart from one another by 120°.

In practice, in a manner known in the prior art, during the assembly phase the cover 60 is first brought together with the bearing unit 30 axially, in such a way that its teeth 65 engage with the corresponding inlet grooves 331 of the annular seats 330. Next, the cover 60 is rotated clockwise or anticlockwise such that its teeth 65 enter the anchoring grooves 332, creating a stable "bayonet" coupling.

Therefore, compared to known solutions, the present invention makes it possible to dispense with a component, namely the second shield with the elastomeric coating 35b on the same side as the securing means 55 for securing the bearing unit 30 to the shaft 50. Moreover, the present solution makes it possible to use a cover 60 of reduced dimensions both radially and axially. The reduced radial dimensions are linked to the fact that the cover does not engage with the casing 20 but rather with the bearing unit 30 which is radially contained inside the casing 20, while the reduced axial dimensions are due to the fact that the cover may be an open cover, thus lacking an axial closure base.

The cover 60 is preferably made of plastic, for example thermoplastic polyurethane (TPU).

The radial thickness of the coupling portion 64 may be up to 3 mm but no less than 1.5 mm, so as to be sufficiently rigid for the cover to be mounted and rotated by hand. The intrinsic rigidity linked to the thickness thus allows the use of a material with a relatively low hardness, for example 55 Shore A, therefore lower than the hardness normally used for this type of material. Also by way of example, the hardness of the material for the elastomeric coating of the shields 35a, 35b is equal to 75 Shore A.

Thus, in the case of a dynamic seal with sliding contact between the coupling portion 64 of the cover 60 and the radially outer ring 31, the sliding contact is "softer", in other words less susceptible to wear.

Alternatively, the cover may be produced with a higher hardness, but in this case the cover will have a coupling portion 64 made, for example, of polytetrafluoroethylene (PTFE), and hence with a lower hardness, again of the order of 55 Shore A.

In light of the above, various designs and sizes of cover 60 are possible: For example:
- a cover 60 made as a single piece, having a thickness of 2 mm, this also being the thickness of the coupling portion 64, and a hardness of 55 Shore A. This solution is suitable for creating a dynamic seal with sliding contact with the radially outer ring 31;
- a cover 60 made as a single piece, having a thickness of 2 mm, this also being the thickness of the coupling portion 64, and a hardness of 60 Shore A. This solution is suitable for creating a labyrinth dynamic seal with the radially outer ring 31;
- a cover 60 made in two separate parts, one of which is the coupling portion 64 co-molded on the cover 60. The cover 60 and the coupling portion 64 have a thickness of 2 mm, but the cover has a hardness of 60 Shore A whereas the coupling portion 64 has a hardness of 55 Shore A. This solution is suitable for creating a dynamic seal with sliding contact with the radially outer ring 31.

The new solution according to the present invention is thus characterized by the fact that it defines a seal directly between the cover and the bearing unit, and thus defines a new form of cover and a new form of radially inner ring for anchoring between these two components. This new solution affords many advantages:
- the dynamic seal between the cover and the radially outer ring, whether with sliding contact or a labyrinth seal, makes it possible to centrifuge the washing water and/or contaminants and thus create a seal which is more efficient than the static seals between the cover and casing, as found in the prior art;
- it is possible to use a cover with an open bottom wall for passage of the shaft;
- it is possible for the cover and in particular its coupling portion to have a size such as to prevent contact with the casing, even in cases of maximum angular misalignment (generally no greater than 3°) between the shaft and the casing;
- enhanced removability of the bearing unit;
- enhanced adaptability of the bearing unit within the specific application without the need to produce a special casing.

In addition to the embodiment of the invention as described above, it is to be understood that there are numerous other variants. It is also to be understood that said embodiments are solely exemplary and do not limit the scope of the invention, its applications, or its possible configurations. On the contrary, although the above description enables those skilled in the art to apply the present invention in at least one exemplary embodiment, it is to be understood that numerous variations of the described components are possible, without thereby departing from the scope of the invention as defined in the appended claims.

## Claims

1. Support assembly (10) for food applications, suitable for movable, rotating or sliding, shafts (50), comprising a bearing unit (30) adapted to receive the movable shaft and a cover (60) for sealing the bearing unit in a fluid-tight manner (30) in which
- the bearing unit includes a radially outer ring (31), stationary, and a radially inner ring (33), rotating, and
- the cover (60) comprises a bottom wall (61) and a side wall (63) shaped but substantially cylindrical and integrally connected to the bottom wall (61), wherein
- the cover (60) is firmly anchored to the radially inner ring (33) of the bearing unit (30), and
- a distal end of the side wall (63) is a coupling portion (64) which engages, axially on the outside, with an annular surface (31a), axially external, of the radially outer ring (31) of the unit bearing (30), providing a dynamic fluid seal;
the support assembly (10) being **characterized in that**:
- the side wall (63) of the cover (60) is provided radially on the inside with a plurality of teeth (65), and
- a radially external side surface (33a) of the radially inner ring (33) is provided with a corresponding plurality of annular seats (330) to receive the teeth (65) of the cover (60) so that in use the teeth (65) and the annular seats (330) realize the anchoring of the cover (60) to the radially inner ring (33) of the bearing unit (30).

2. Support assembly (10) according to claim 1, wherein the dynamic fluid seal is a sliding contact seal.

3. Support assembly (10) according to claim 1, wherein the dynamic fluid seal is a labyrinth seal.

4. Support assembly (10) according to any of the preceding claims, wherein the radial thickness of the coupling portion (64) is comprised between 1.5 mm and 3 mm.

5. Support assembly (10) according to any of the preceding claims, wherein the cover (60) is made of thermoplastic polyurethane.

6. Support assembly (10) according to claim 2 or 5, wherein the coupling portion (64) of the cover (60) has a hardness equal to 55 Shore A.

7. Support assembly (10) according to claim 2 or 5, wherein the coupling portion (64) is co-molded on the cover (60), is made of polytetrafluoroethylene and has a hardness equal to 55 Shore A.

8. Support assembly (10) according to claim 3 or 5, wherein the coupling portion (64) of the cover (60) has a hardness equal to 60 Shore A.

9. Support assembly according to any of the preceding claims, wherein the bottom wall (61) of the cover (60) has a circular opening (62) for the passage of the shaft (50).

## Patentansprüche

1. Stützanordnung (10) für Lebensmittelanwendungen, geeignet für bewegliche, rotierende oder verschiebbare Wellen (50), umfassend eine Lagereinheit (30), die zur Aufnahme der beweglichen Welle eingerichtet ist, und eine Abdeckung (60) zum fluiddichten Abdichten der Lagereinheit (30), wobei
- die Lagereinheit einen stationären radial äußeren Ring (31) und einen rotierenden radial inneren Ring (33) umfasst und
- die Abdeckung (60) eine Bodenwand (61) und eine Seitenwand (63), die geformt, aber im Wesentlichen zylindrisch und mit der Bodenwand (61) integral verbunden ist, umfasst, wobei
- die Abdeckung (60) fest am radial inneren Ring (33) der Lagereinheit (30) verankert ist und
- ein distales Ende der Seitenwand (63) ein Kupplungsabschnitt (64) ist, der axial außen mit einer Ringfläche (31a) axial außerhalb des radial äußeren Rings (31) des Einheitslagers (30) in Eingriff gelangt und eine dynamische Fluiddichtung vorsieht;
wobei die Stützanordnung (10) **dadurch gekennzeichnet ist, dass**:
- die Seitenwand (63) der Abdeckung (60) radial innen mit mehreren Zähnen (65) versehen ist und
- eine radial äußere Seitenfläche (33a) des radial inneren Rings (33) mit einer entsprechenden Anzahl von ringförmigen Aufnahmen (330) zur Aufnahme der Zähne (65) der Abdeckung (60) versehen ist, sodass die Zähne (65) und die ringförmigen Aufnahmen (330) bei der Verwendung die Verankerung der Abdeckung (60) am radial inneren Ring (33) der Lagereinheit (30) umsetzen.

2. Stützanordnung (10) nach Anspruch 1, wobei die dynamische Fluiddichtung eine Gleitkontaktdichtung ist.

3. Stützanordnung (10) nach Anspruch 1, wobei die dynamische Fluiddichtung eine Labyrinthdichtung ist.

4. Stützanordnung (10) nach einem der vorhergehenden Ansprüche, wobei die radiale Dicke des Kupplungsabschnitts (64) zwischen 1,5 mm und 3 mm beträgt.

5. Stützanordnung (10) nach einem der vorhergehenden Ansprüche, wobei die Abdeckung (60) aus thermoplastischem Polyurethan hergestellt ist.

6. Stützanordnung (10) nach Anspruch 2 oder 5, wobei der Kupplungsabschnitt (64) der Abdeckung (60) eine Härte von 55 Shore A aufweist.

7. Stützanordnung (10) nach Anspruch 2 oder 5, wobei der Kupplungsabschnitt (64) an der Abdeckung (60) aufgeformt ist, aus Polytetrafluorethylen hergestellt ist und eine Härte von 55 Shore A aufweist.

8. Stützanordnung (10) nach Anspruch 3 oder 5, wobei der Kupplungsabschnitt (64) der Abdeckung (60) eine Härte von 60 Shore A aufweist.

9. Stützanordnung nach einem der vorhergehenden Ansprüche, wobei die Bodenwand (61) der Abdeckung (60) eine kreisförmige Öffnung (62) für die Durchführung der Welle (50) aufweist.

## Revendications

1. Ensemble de support (10) pour applications alimentaires, adapté pour des arbres (50) mobiles, rotatifs ou coulissants, comprenant une unité de palier (30) adaptée pour recevoir l'arbre mobile et un couvercle (60) pour fermer l'unité de palier (30) de manière étanche, dans lequel
- l'unité de palier comporte une bague radialement extérieure (31) fixe, et une bague radialement intérieure (33) tournante, et
- le couvercle (60) comprend une paroi de fond (61) et une paroi latérale (63) profilée mais sensiblement cylindrique et reliée d'un seul tenant avec la paroi de fond (61),
- le couvercle (60) étant fermement assujetti à la bague radialement intérieure (33) de l'unité de palier (30), et
- une extrémité distale de la paroi latérale (63) étant une partie d'accouplement (64) qui vient en prise, axialement sur l'extérieur, avec une surface annulaire (31a), axialement externe, de la bague radialement extérieure (31) du palier d'unité (30), et constitue ainsi un joint d'étanchéité dynamique ;
l'ensemble de support (10) étant **caractérisé en ce que** :
- la paroi latérale (63) du couvercle (60) est pourvue radialement sur l'intérieur d'une pluralité de dents (65), et
- une surface latérale radialement externe (33a) de la bague radialement intérieure (33) est pourvue d'une pluralité correspondante de sièges annulaires (330) destinés à recevoir les dents (65) du couvercle (60) de sorte que, durant l'utilisation, les dents (65) et les sièges annulaires (330) réalisent l'assujettissement du couvercle (60) à la bague radialement intérieure (33) de l'unité de palier (30).

2. Ensemble de support (10) selon la revendication 1, dans lequel le joint d'étanchéité dynamique est un joint à contact glissant.

3. Ensemble de support (10) selon la revendication 1, dans lequel le joint d'étanchéité dynamique est un joint à labyrinthe.

4. Ensemble de support (10) selon l'une quelconque des revendications précédentes, dans lequel l'épaisseur radiale de la partie d'accouplement (64) est comprise entre 1,5 mm et 3 mm.

5. Ensemble de support (10) selon l'une quelconque des revendications précédentes, dans lequel le couvercle (60) est en polyuréthanne thermoplastique.

6. Ensemble de support (10) selon la revendication 2 ou 5, dans lequel la partie d'accouplement (64) du couvercle (60) a une dureté égale à 55 Shore A.

7. Ensemble de support (10) selon la revendication 2 ou 5, dans lequel la partie d'accouplement (64) est comoulée sur le couvercle (60), est en polytétrafluoroéthylène et a une dureté égale à 55 Shore A.

8. Ensemble de support (10) selon la revendication 3 ou 5, dans lequel la partie d'accouplement (64) du couvercle (60) a une dureté égale à 60 Shore A.

9. Ensemble de support selon l'une quelconque des revendications précédentes, dans lequel la paroi de fond (61) du couvercle (60) présente une ouverture circulaire (62) pour le passage de l'arbre (50).
